(19) Europäisches Patentamt / European Patent Office / Office européen des brevets

(11) **EP 2 155 359 B1**

(12) **FASCICULE DE BREVET EUROPEEN**

(45) Date de publication et mention de la délivrance du brevet:
**22.02.2012 Bulletin 2012/08**

(21) Numéro de dépôt: **08805574.4**

(22) Date de dépôt: **14.05.2008**

(51) Int Cl.:
**B01D 53/04** (2006.01)  **B01D 53/14** (2006.01)
**B01J 20/04** (2006.01)  **B01J 20/06** (2006.01)
**C10L 3/10** (2006.01)  **B01D 53/40** (2006.01)
**B01D 53/48** (2006.01)

(86) Numéro de dépôt international:
**PCT/FR2008/000676**

(87) Numéro de publication internationale:
**WO 2009/004132 (08.01.2009 Gazette 2009/02)**

(54) **PROCÉDÉ DE DÉSACIDIFICATION D'UN GAZ NATUREL METTANT EN OEUVRE DES HYDROXYDES DOUBLES LAMELLAIRES**

VERFAHREN ZUR ENTSÄUERUNG EINES ERDGASES MITHILFE GESCHICHTETER DOPPELHYDROXIDE

PROCESS FOR DEACIDIFICATION OF A NATURAL GAS USING LAYERED DOUBLE HYDROXIDES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.05.2007 FR 0703551**

(43) Date de publication de la demande:
**24.02.2010 Bulletin 2010/08**

(73) Titulaires:
• **IFP Energies nouvelles**
  **92852 Rueil-Malmaison Cedex (FR)**
• **BRGM**
  **75739 Paris Cedex 15 (FR)**

(72) Inventeurs:
• **CADOURS, Renaud**
  **F-69340 Francheville (FR)**
• **MAGNE-DRISCH, Julia**
  **F-38200 Villette de Vienne (FR)**
• **GRANDJEAN, Julien**
  **F-69008 Lyon (FR)**
• **SERON, Alain**
  **F-45410 Vienne en Aval (FR)**
• **DELORME, Fabian**
  **F-45000 Orleans (FR)**

(56) Documents cités:
**WO-A-2004/099351  WO-A-2007/057570**
**JP-A- 2005 263 596  US-A- 5 114 898**
**US-A- 5 360 536**

**Description**

La présente invention concerne le domaine de la désacidification du gaz naturel.

Le gaz naturel est essentiellement constitué de 25 à 99 % vol. d'hydrocarbures, essentiellement du méthane, accompagné d'hydrocarbures possédant généralement entre 2 et 6 atomes de carbone. La présence de dioxyde de carbone ($CO_2$), dans des proportions comprises entre 1 et 75 % volume est souvent observée. D'autres impuretés acides, essentiellement des composés soufrés tels que les mercaptans, l'oxysulfure de carbone (COS), l'hydrogène sulfuré ($H_2S$) peuvent être présents dans des concentrations allant de quelques ppm jusqu'à 50 % vol. Le gaz naturel est généralement disponible à des pressions et à des températures comprises entre 20 et 100 bars, et entre 20°C et 60°C.

La désacidification du gaz naturel est généralement réalisée par lavage avec une solution absorbante.

Cependant l'utilisation des solutions absorbantes usuelles présente différents inconvénients.

Le principal inconvénient des solutions absorbantes à base d'alcanolamines réside dans leur instabilité chimique, en partie vis-à-vis du $CO_2$, mais surtout vis-à-vis de l'oxygène.

Concernant les solutions absorbantes basées sur une absorption physique, tels que par exemple le méthanol réfrigéré ou les polyéthylèneglycols, on constate généralement une co-absorption non négligeable de méthane. Par ailleurs, ces solutions absorbantes à caractère physique présentent une efficacité limitée dans l'absorption des composés acides.

Par ailleurs, la désacidification d'un gaz naturel impose souvent d'associer plusieurs étapes de traitement pour garantir l'élimination de toutes les impuretés acides. Par exemple, on met en oeuvre une première étape d'élimination des composés les plus acides tels que l'$H_2S$ et le $CO_2$, suivie d'une ou plusieurs étapes de finition afin d'éliminer les autres composés acides tels que les mercaptans et le COS. La première étape peut consister en un lavage du gaz avec une solution aqueuse d'alcanolamine permettant l'élimination du $CO_2$ et de l'$H_2S$. Les étapes de finition peuvent consister à éliminer les mercaptans et le COS, par adsorption sur des tamis moléculaires ou par lavage du gaz avec une solution à la soude.

La présente invention propose d'utiliser une suspension aqueuse comportant des hydroxydes doubles lamellaires ou des oxydes mixtes issus du traitement thermique modéré des HDL, afin de traiter un gaz naturel.

La présente invention concerne un procédé de traitement d'un gaz naturel comportant des composés acides du groupe constitué du $CO_2$, de l'$H_2S$, du COS et des mercaptans, dans lequel on met en contact un fluide hydrocarboné comportant au moins l'un des composés COS et mercaptans avec une suspension aqueuse de l'un des produits du groupe constitué par les hydroxydes doubles lamellaires et les oxydes mixtes obtenus par chauffage des hydroxydes doubles lamellaires à une température comprise entre 200°C et 600°C de manière à ce que ledit mélange capte du COS et des mercaptans et à obtenir un fluide hydrocarboné appauvri en composés acides.

Selon l'invention, le fluide hydrocarboné peut être constitué dudit gaz naturel.

Alternativement, le gaz naturel peut être désacidifié au moyen d'une solution absorbante de manière à produire un gaz appauvri en $CO_2$ et en $H_2S$. Dans ce cas, le fluide hydrocarboné peut être constitué dudit gaz appauvri en $CO_2$ et en $H_2S$.

Alternativement, le gaz naturel peut être appauvri en mercaptan en étant mis en contact sur un premier tamis moléculaire fonctionnant en alternance avec un deuxième tamis, le deuxième tamis moléculaire étant traversé par un gaz de régénération pour désorber les mercaptans. Dans ce cas, le fluide hydrocarboné peut être constitué dudit gaz de régénération chargé en mercaptans.

Alternativement, le gaz naturel est séparé en une coupe comportant du méthane et de l'éthane et au moins une coupe liquide comportant des hydrocarbures plus lourds que l'éthane. Dans ce cas, le fluide hydrocarboné peut être constitué de ladite coupe liquide comportant des hydrocarbures plus lourds que l'éthane.

On peut régénérer lesdits produits chargés en COS et mercaptans de manière à libérer un effluent gazeux comportant des composés carbonés et soufrés.

Dans le cas où le fluide hydrocarboné est chargé en $CO_2$ et en $H_2S$, on peut effectuer une première opération de régénération desdits produits de manière à libérer un premier effluent gazeux riche en $CO_2$, puis on peut effectuer une deuxième opération de régénération desdits produits de manière à libérer un deuxième effluent gazeux riche en composés soufrés.

Le procédé selon l'invention permet, grâce à l'utilisation des hydroxydes doubles lamellaires ou des oxydes mixtes issus du traitement thermique modéré des HDL, de capter simultanément les composés fortement acides comme le $CO_2$ ou l'$H_2S$, et des impuretés comme le COS et les mercaptans dont l'acidité est bien plus faible.

De plus, les hydroxydes doubles lamellaires ou les oxydes mixtes issus du traitement thermique modéré des HDL, absorbent préférentiellement le $CO_2$, l'$H_2S$, le COS et les mercaptans, sans absorber de méthane.

D'autres caractéristiques et avantages de l'invention seront mieux compris et apparaîtront clairement à la lecture de la description faite ci-après en se référant aux dessins parmi lesquels :

- la figure 1 propose un mode de réalisation préféré de l'invention,

- les figures 2 à 4 proposent des variantes de réalisation de l'invention.

Selon l'invention, on utilise un mélange absorbant composé d'une suspension aqueuse d'hydroxydes doubles lamellaires, couramment nommés "HDL", ou d'oxydes mixtes issus du traitement thermique modéré des HDL, pour extraire les composés acides au cours du traitement d'un gaz naturel.

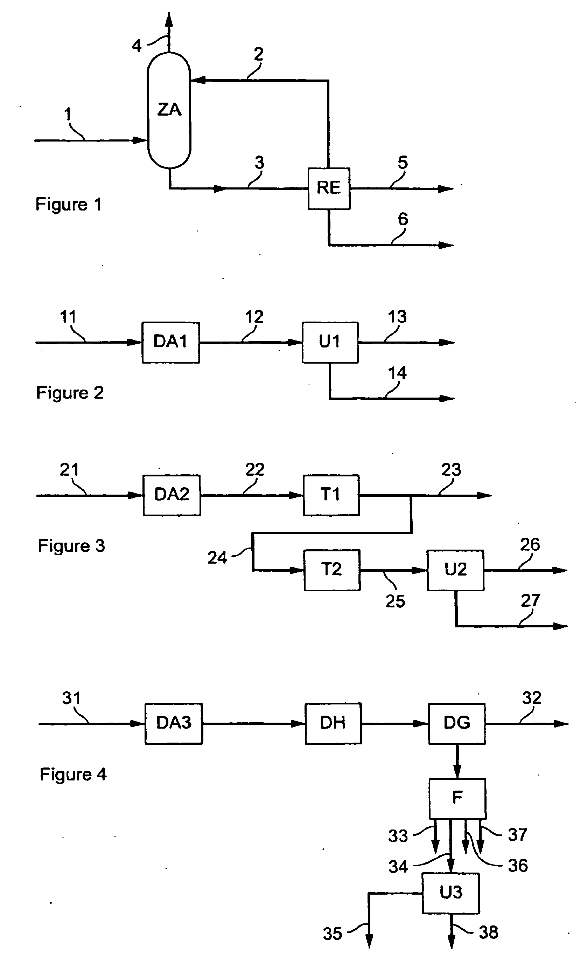

Le procédé selon l'invention est décrit en référence à la figure 1. Le fluide arrivant par le conduit 1 peut être du gaz naturel, du gaz obtenu après traitement, par exemple désacidification, déshydratation du gaz naturel. Le fluide 1 peut également être un gaz de régénération d'un tamis moléculaire utilisé pour le traitement d'un gaz naturel. Alternativement, le fluide 1 peut être une coupe liquide d'hydrocarbures obtenue par fractionnement d'un gaz naturel.

Le fluide circulant dans le conduit 1 comporte des hydrocarbures, ainsi que des composés acides à éliminer, tels que le CO2, l'H2S, le COS ou des mercaptans. Ce fluide peut être gazeux ou liquide

En référence à la figure 1, le fluide circulant dans le conduit 1 est mis en contact dans la zone ZA avec le mélange absorbant, défini ci-dessus, arrivant par le conduit 2. Les techniques classiques de mise en contact de gaz/liquide/solide peuvent être mises en oeuvre : lit bouillonnant, colonne à bulles, colonne à plateaux, colonne à garnissage, vrac ou structuré, réacteurs agités.

Les HDL sont des argiles anioniques. La formule générale caractérisant les produits de la famille des HDL est la suivante :

$$\left[\left[M(II)\right]_{1-z}\left[M(III)\right]_{z}(OH)_{2}\right]\left[A_{y/n}^{n-}\right]\cdot yH_2O$$

avec :

M(II) représentant un cation divalent pouvant être des ions $Mg^{2+}$, $Mn^{2+}$, $Fe^{2+}$ $Co^{2+}$ $Cu^{2+}$, $Ni^{2+}$, $Zn^{2+}$, etc

M(III) représentant un cation trivalent pouvant être des ions $Al^{3+}$, $Cr^{3+}$, $Fe^{3+}$, $Mn^{3+}$, $Co^{3+}$, etc. ; (des substitutions par des cations monovalents ou tétravalents peuvent être observées dans ces structures).

A représentant un complexe chargé négativement pouvant être notamment un anion compensateur tel que $CO_3^{2-}$, $OH^-$, $Cl^-$, $SO_4^{2-}$, $BO_3^-$, F, Br, $ClO_4^-$, $[FeCN_6]^{4-}$ ou une molécule d'ADN.

Les hydroxydes doubles lamellaires qui sont d'une relative rareté dans la nature peuvent être fabriqués par synthèse, par exemple en mettant en oeuvre le procédé décrit par le document FR 2 882 549.

Les oxydes mixtes issus du traitement thermique modéré des HDL peuvent être obtenus de la manière suivante. Les oxydes mixtes amorphes sont obtenus par traitement thermique modéré des HDL. Le traitement est réalisé par chauffage des HDL à des températures comprises entre 200 et 600°C en fonction de la composition chimique du HDL de départ. Le composé obtenu est un oxyde amorphe ou très mal cristallisé présentant la capacité particulière à régénérer la structure HDL en présence d'une solution d'anions.

Selon l'invention, on utilise les HDL ou des oxydes mixtes issus du traitement thermique modéré des HDL, en suspension dans de l'eau. On peut utiliser un mélange comportant de 10 à 500 g d'HDL ou d'oxydes mixtes en suspension dans 1 litre d'eau.

Dans la zone de mise en contact ZA, les composés acides contenus dans le fluide sont absorbés par les HDL ou les oxydes mixtes issus du traitement thermique modéré des HDL, dispersés dans l'eau.

De façon inattendue, on a pu constater que la suspension aqueuse d'HDL ou d'oxydes mixtes issus du traitement thermique modéré des HDL permet non seulement de capter le CO2 et l'H2S, mais également le COS et les mercaptans. Les essais présentés ci-après montrent bien que les HDL ou les oxydes mixtes issus du traitement thermique modéré des HDL en phase aqueuse ont effectivement une capacité à capter efficacement le COS et les mercaptans

Essai 1 :

Une suspension est préparée par mélange d'eau et d'oxydes mixtes issus du traitement thermique modéré des HDL, les masses respectives de chaque constituant représentant respectivement 95 % et 5 % poids. 180 g du mélange ainsi constitué sont introduits dans un réacteur fermé, régulé à une température de 30°C. Une quantité de méthylmercaptan gazeux est introduite dans la phase vapeur du réacteur, cette phase ayant un volume de 159 $cm^3$. La pression partielle en méthylmercaptan atteint 1,41 bar, suite à l'introduction du gaz acide dans le réacteur. On observe alors une diminution de la pression dans le réacteur, jusqu'à une pression partielle de 34 mbar.

En fin d'essai, 97,6% du méthyl mercaptan introduit ont été absorbés, ce qui correspond à une capacité d'absorption de 0,9 mmol de methyl mercaptan par gramme d'oxydes mixtes issus du traitement thermique modéré des HDL.

Essai 2 :

Un essai similaire à l'essai 1 est réalisé avec du COS. En utilisant le montage décrit précédemment, on injecte à 30°C du COS afin d'avoir une pression partielle de 971 mbar au dessus d'une suspension eau-oxydes mixtes issus du traitement thermique modéré des HDL de composition 95 - 5 % poids. A l'équilibre, on mesure une pression partielle en COS de 26 mbar, ce qui correspond à une absorption de 97,3 % du COS introduit, soit une capacité d'absorption de 0,6 mmol de COS par gramme d'oxydes mixtes issus du traitement thermique modéré des HDL.

En référence à la figure 1, le fluide appauvri en composés acides est évacué par le conduit 4. Le mélange absorbant, composé d'une suspension aqueuse d'HDL ou d'oxydes mixtes issus du traitement thermique modéré des HDL, chargé en composés acides, peut être envoyé par le conduit 3 dans la zone de régénération RE ou dans un lieu de stockage.

Dans RE, la régénération peut être réalisée par exemple par un agent chimique ou par un traitement thermique, qui permet de libérer les composés acides absorbés par les HDL ou les oxydes mixtes issus du traitement thermique modéré des HDL. Les composés acides libérés sous forme gazeuse sont évacués par le conduit 5 et peuvent par exemple être introduits dans une unité de traitement Claus pour être transformés en soufre élémentaire. La suspension aqueuse d'HDL ou d'oxydes mixtes issus du traitement thermique modéré des HDL, débarrassée des composés acides est recyclée par le conduit 2 dans la zone de mise en contact ZA.

Lors de la mise en oeuvre du procédé selon l'invention pour traiter des effluents comportant au moins deux composés acides, comme par exemple l'H2S et le CO2, les HDL ou les oxydes mixtes issus du traitement thermique modéré des HDL, chargés en composés acides, peuvent être traités sélectivement lors de la régénération dans RE de manière à libérer séparément des composés soufrés et le CO2. Dans ce cas, les deux composés acides sont évacués séparément par les conduits 5 et 6. Ce mode de régénération est particulièrement intéressant car les composés acides purs ainsi libérés peuvent être traités séparément. Par exemple, l'effluent riche en gaz soufrés peut être introduit dans une unité Claus qui fonctionne d'autant mieux que l'effluent est riche en H2S. L'effluent riche en CO2 peut être injecté dans un réservoir souterrain.

Les procédés schématisés par les figures 2 à 4 intègrent l'étape d'absorption, selon l'invention, des composés acides par des HDL ou d'oxydes mixtes issus du traitement thermique modéré des HDL en suspension aqueuse à différentes étapes de la chaîne de traitement de gaz naturel.

En référence à la figure 2, le gaz naturel arrivant par le conduit 11 subit un traitement de désacidification dans l'unité DA1 au moyen d'une solution absorbante conventionnelle. Par exemple, on désacidifie le gaz naturel par mise en contact avec une solution comportant par exemple des alcanolamines, du méthanol réfrigérés et/ou des polyéthylèneglycols. On peut mettre en oeuvre un procédé de désacidification décrit par l'un des documents suivants : FR 2 820 430, FR 2 605 241, FR 2 636 857 et FR 2 743 083.

Le gaz appauvri en composés acides est évacué par le conduit 12, puis introduit dans l'unité de traitement U1 qui met en oeuvre le procédé décrit en référence à la figure 1. Ainsi, on complète la désacidification du gaz par l'utilisation des HDL. Dans ce cas, les HDL ou les oxydes mixtes issus du traitement thermique modéré des HDL permettent de retirer efficacement le COS et les mercaptans qui sont difficilement captés par les solutions absorbantes conventionnelles. Le gaz désacidifié est évacué par le conduit 13. Les composés acides séparés du gaz dans l'unité U1 sont évacués par le conduit 14.

En référence à la figure 3, le gaz naturel arrivant par le conduit 21 subit un traitement de désacidification dans l'unité DA2 au moyen d'une solution absorbante conventionnelle.

Le gaz naturel appauvri en composés acides issu de DA2 par le conduit 22 est mis en contact et traverse le tamis moléculaire T1. Le tamis T1 permet d'adsorber les mercaptans contenus dans le gaz. Le gaz désacidifié est évacué par le conduit 23. Le tamis T1 fonctionne en alternance avec le tamis T2. Ces tamis peuvent être constitués d'une zéolite de type 3 ou 4A, ou encore 13X, ou d'alumine ou de gel de silice. Lorsque l'un des tamis travaille en mode adsorption, l'autre est régénéré, puis les rôles sont inversés. Sur la figure 3, le tamis T2 est régénéré par balayage d'un gaz de régénération arrivant par le conduit 24, par exemple une portion du gaz traité et issu de T1 par le conduit 23. Le gaz de régénération permet de désorber les mercaptans contenus dans le tamis T2. Après passage dans le tamis T2, le gaz de régénération chargé en mercaptans est envoyé par le conduit 25 dans l'unité U2 qui met en oeuvre le procédé décrit par la figure 1. Ainsi, on purifie efficacement le gaz de régénération en retirant les mercaptans au moyen des HDL ou d'oxydes mixtes issus du traitement thermique modéré des HDL en phase aqueuse. Le gaz de régénération purifié est évacué de U2 par le conduit 26, les composés acides séparés du gaz par les HDL ou les oxydes mixtes issus du traitement thermique modéré des HDL sont évacués par le conduit 27.

En référence à la figure 4, le gaz naturel arrivant par le conduit 31 subit un traitement de désacidification dans l'unité DA3 au moyen d'une solution absorbante conventionnelle. Puis le gaz désacidifié est déshydraté dans l'unité DH par exemple au moyen d'un procédé au glycol. On peut mettre en oeuvre un procédé décrit par le document FR 2 740 468. Le gaz déshydraté est envoyé dans l'unité de dégazolinage DG pour séparer la coupe méthane/éthane des hydrocarbures plus lourds contenus dans le gaz naturel. La coupe méthane/éthane est évacuée par le conduit 32. Les hydrocarbures restants sont séparés dans l'unité de fractionnement F en différentes coupes d'hydrocarbures valorisables, par exemple une coupe propane 33, une coupe butane 34 et une coupe comportant les pentanes 36 et les hydrocarbures plus lourds 37. Les mercaptans qui n'ont pas été retirés du gaz naturel dans l'unité DA3 se retrouvent majoritairement dans la coupe propane 33 et la coupe butane 34. De préférence, la coupe propane et/ou la coupe butane peuvent être traitées dans une unité qui met en oeuvre le procédé décrit en référence à la figure 1. Les autres coupes d'hydrocarbures liquide peuvent subir le même traitement. Selon le schéma de la figure 4, seule la coupe butane est introduite dans l'unité de traitement U3 qui met en oeuvre le procédé de la figure 1. Dans l'unité U3, les mercaptans sont retirés de la coupe butane au moyen des HDL ou d'oxydes mixtes issus du traitement thermique modéré des HDL, en suspension aqueuse. La coupe butane appauvrie en mercaptans est évacuée par le conduit 38. Les mercaptans séparés des coupes hydrocarbures liquides dans l'unité U3 sont évacués par le conduit 35.

De manière générale, on peut mettre en oeuvre le procédé selon l'invention décrit en référence à la figure 1 pour traiter tout fluide hydrocarboné produit lors du traitement du gaz naturel.

## Revendications

1. Procédé de traitement d'un gaz naturel comportant des composés acides du groupe constitué du CO2, de l'H2S, du COS et des mercaptans, dans lequel on met en contact un fluide hydrocarboné comportant au moins l'un des composés COS et mercaptans, avec une suspension aqueuse de l'un des produits du groupe constitué par les hydroxydes doubles lamellaires et les oxydes mixtes obtenus par chauffage des hydroxydes doubles lamellaires à une température comprise entre 200°C et 600°C, de manière à ce que ledit mélange capte du COS et des mercaptans et à obtenir un fluide hydrocarboné appauvri en composés acides.

2. Procédé selon la revendication 1, dans lequel le fluide hydrocarboné est constitué dudit gaz naturel.

3. Procédé selon la revendication 1, dans lequel le gaz naturel est désacidifié au moyen d'une solution absorbante de manière à produire un gaz appauvri en CO2 et en H2S, le fluide hydrocarboné est constitué dudit gaz appauvri en CO2 et en H2S.

4. Procédé selon la revendication 1, dans lequel le gaz naturel est appauvri en mercaptan en étant mis en contact sur un premier tamis moléculaire fonctionnant en alternance avec un deuxième tamis, le deuxième tamis moléculaire étant traversé par un gaz de régénération pour désorber des mercaptans, le fluide hydrocarboné étant constitué dudit gaz de régénération chargé en mercaptans.

5. Procédé selon la revendication 1, dans lequel le gaz naturel est séparé en une coupe comportant du méthane et de l'éthane et au moins une coupe liquide comportant des hydrocarbures plus lourds que l'éthane, le fluide hydrocarboné étant constitué de ladite coupe liquide comportant des hydrocarbures plus lourds que l'éthane.

6. Procédé selon l'une des revendications précédentes, dans lequel on régénère lesdits produits chargés en COS et mercaptans de manière à libérer un effluent gazeux comportant des composés carbonés et soufrés.

7. Procédé selon l'une des revendications précédentes, dans lequel le fluide hydrocarboné est chargé en CO2 et en H2S et dans lequel on effectue une première opération de régénération desdits produits de manière à libérer un premier effluent gazeux riche en CO2, puis on effectue une deuxième opération de régénération desdits produits de manière à libérer un deuxième effluent gazeux riche en composés soufrés.

## Claims

1. A method of treating a natural gas comprising acid compounds from the group made up of $CO_2$, $H_2S$, COS and mercaptans, wherein a hydrocarbon fluid containing at least one of the compounds COS and mercaptans is contacted with an aqueous suspension of one of the products from the group made up of lamellar double hydroxides and mixed oxides obtained by heating lamellar double hydroxides to a temperature ranging between 200°C and 600°C, so that said mixture collects COS and mercaptans, and so as to obtain a hydrocarbon fluid depleted in acid compounds.

**2.** A method as claimed in claim 1, wherein the hydrocarbon fluid consists of said natural gas.

**3.** A method as claimed in claim 1, wherein the natural gas is deacidized by means of an absorbent solution so as to produce a gas depleted in $CO_2$ and $H_2S$, the hydrocarbon fluid consisting of said gas depleted in $CO_2$ and $H_2S$.

**4.** A method as claimed in claim 1, wherein the natural gas is depleted in mercaptan by contacting on a first molecular sieve operating alternately with a second sieve, the second molecular sieve being traversed by a regeneration gas for desorbing mercaptans, the hydrocarbon fluid consisting of said mercaptan-laden regeneration gas.

**5.** A method as claimed in claim 1, wherein the natural gas is separated into a cut comprising methane and ethane and into at least one liquid cut comprising hydrocarbons heavier than ethane, the hydrocarbon fluid consisting of said liquid cut comprising hydrocarbons heavier than ethane.

**6.** A method as claimed in any one of the previous claims, wherein said products laden with COS and mercaptans are regenerated so as to release a gaseous effluent comprising carbon and sulfur compounds.

**7.** A method as claimed in any one of the previous claims, wherein the hydrocarbon fluid is laden with $CO_2$ and $H_2S$ and wherein a first operation of regenerating said products is carried out so as to release a first $CO_2$-rich gaseous effluent, then a second operation of regenerating said products is carried out so as to release a second gaseous effluent rich in sulfur compounds.

**Patentansprüche**

**1.** Verfahren zur Behandlung eines Erdgases, das saure Verbindungen der Gruppe aufweist, welche aus CO2, H2S, COS und Mercaptanen besteht, wobei ein kohlenwasserstoffhaltiges Fluid, das mindestens eine der Verbindungen COS und Mercaptane aufweist, mit einer wässrigen Suspension eines der Stoffe in Kontakt gebracht wird, welche der Gruppe angehören, die aus den Doppelhydroxiden mit Schichtstruktur und den Mischoxiden, die durch Erhitzen der Doppelhydroxide mit Schichtstruktur auf eine Temperatur im Bereich von 200 °C und 600 °C erhalten werden, besteht, sodass die Mischung COS und Mercaptane aufnimmt und ein kohlenwasserstoffhaltiges Fluid erhalten wird, das an sauren Verbindungen abgereichert ist.

**2.** Verfahren nach Anspruch 1, wobei das kohlenwasserstoffhaltige Fluid aus dem Erdgas besteht.

**3.** Verfahren nach Anspruch 1, wobei das Erdgas mittels einer absorbierenden Lösung entsäuert wird, sodass ein Gas erzeugt wird, das an CO2 und an H2S abgereichert ist, wobei das kohlenwasserstoffhaltige Fluid aus den Gas besteht, das an CO2 und an H2S abgereichert ist.

**4.** Verfahren nach Anspruch 1, wobei das Erdgas an Mercaptan abgereichert wird, indem es mit einem ersten Molekularsieb in Kontakt gebracht wird, das im Wechsel mit einem zweiten Sieb betrieben wird, wobei das zweite Molekularsieb von einem Regenerationsgas durchströmt wird, um die Mercaptane zu desorbieren, wobei das kohlenwasserstoffhaltige Fluid aus dem Regenerationsgas besteht, das mit Mercaptanen befrachtet ist.

**5.** Verfahren nach Anspruch 1, wobei das Erdgas in eine Fraktion, die Methan und Ethan aufweist, und in mindestens eine flüssige Fraktion, die Kohlenwasserstoffe aufweist, welche schwerer als Ethan sind, aufgetrennt wird, wobei das kohlenwasserstoffhaltige Fluid aus der flüssigen Fraktion besteht, welche die Kohlenwasserstoffe aufweist, die schwerer als Ethan sind.

**6.** Verfahren nach einem der vorhergehenden Ansprüche, wobei die Produkte, die mit COS und Mercaptanen befrachtet sind, derart regeneriert werden, dass ein gasförmiger Stoffstrom freigesetzt wird, der kohlenstoffhaltige und schwefelhaltige Verbindungen aufweist.

**7.** Verfahren nach einem der vorhergehenden Ansprüche, wobei das kohlenwasserstoffhaltige Fluid mit CO2 und mit H2S befrachtet ist und wobei ein erster Vorgang zur Regeneration der Produkte derart durchgeführt wird, dass ein erster gasförmiger Stoffstrom freigesetzt wird, der reich an CO2 ist, woraufhin ein zweiter Vorgang zur Regeneration der Produkte derart durchgeführt wird, dass ein zweiter gasförmiger Stoffstrom freigesetzt wird, der reich an schwefelhaltigen Verbindungen ist.

Figure 1

Figure 2

Figure 3

Figure 4

## RÉFÉRENCES CITÉES DANS LA DESCRIPTION

**Documents brevets cités dans la description**

- FR 2882549
- FR 2820430
- FR 2605241
- FR 2636857
- FR 2743083
- FR 2740468